# FASCICULE DE BREVET EUROPEEN

(11) **EP 0 912 402 B1**
(45) Date de publication et mention de la délivrance du brevet: **21.03.2001**
(21) Numéro de dépôt: 97918199.7
(22) Date de dépôt: 10.04.1997
(51) Int. Cl.: B65D 1/02, B65D 35/44

(54) **RECIPIENT AVEC FERMETURE REUTILISABLE MONTE D'UNE SEULE PIECE ET SON PROCEDE DE FABRICATION**
EINTEILIG MIT DEM BEHÄLTER GEFORMTER, WIEDERVERWENDBARER VERSCHLUSS UND VERFAHREN ZU DESSEN HERSTELLUNG
CONTAINER WITH REUSABLE CLOSURE MOUNTED IN ONE PIECE AND METHOD OF MANUFACTURE THEREOF

(30) Priorité: 22.04.1996 FR 9605342
(43) Date de publication de la demande: 06.05.1999
(73) Titulaire: CEBAL S.A., F-92115 Clichy (FR)
(72) Inventeur: SCHNEIDER, Bernard, F-51800 Sainte-Menehould (FR); MEAUSOONE, Jean-Paul, F-51100 Reims (FR)
(74) Mandataire: Pigasse, Daniel
(86) Numéro de dépôt international: FR9700638
(87) Numéro de publication internationale: WO9739953

(56) Documents cités:
- FR-A- 2 649 676
- US-A- 4 405 053
- US-A- 4 687 111

## Description

### DOMAINE DE L'INVENTION

L'invention concerne la fabrication d'une tête en matière plastique moulée comportant un orifice de sortie relié par une portion annulaire déchirable à un opercule jouant le rôle d'obturateur étanche avant rupture. Dans le cas d'emballages multidoses, cet opercule est utilisé pour le rebouchage de l'orifice. La tête peut être fixée sur l'extrémité ouverte de tout récipient dont l'orifice doit rester bouché hermétiquement avant la première utilisation et être ensuite occulté par un bouchon entre chaque utilisation.

La réalisation de telles têtes évite de fabriquer séparément les bouchons et de mettre en place ces derniers sur les récipients par des moyens industriels coûteux. Tout récipient pour lequel le coût de fabrication constitue un facteur essentiel est particulièrement concerné par l'invention, Il s'agit notamment de réaliser des tubes souples destinés à contenir des produits d'hygiène de grande consommation ou encore de réaliser des récipients de petite taille, contenant des échantillons de produits cosmétiques, d'hygiène ou de parapharmacie, distribués souvent gratuitement.

L'invention concerne donc deux domaines bien distincts de la grande distribution mais pour lesquels le coût de l'emballage est un facteur essentiel: la fourniture du produit de consommation courante au prix le plus bas et la fourniture gratuite d'échantillons, par exemple de produits cosmétiques.

### ETAT DE LA TECHNIQUE

Dans le domaine des produits de grande consommation, on rechercne depuis longtemps à mettre au point des têtes économiques pour des tubes souples, destinés par exemple à contenir de la pâte dentifrice.

Avec le tube décrit dans FR-A-2 712 258, la demanderesse a mis au point une tête de tube ayant un opercule en forme de chapeau renversé et facilement déchirable. Le goulot a un bord intérieur annulaire épais qui délimite son orifice et, de l'autre côté de la portion annulaire déchirable, la partie obturant l'orifice du goulot se prolonge vers l'extérieur en constituant un fond épais qui se raccorde à une jupe extérieure cylindrique.

S'il résout le problème économique initialement posé, le tube selon FR 2 712 258 ne peut être parfaitement utilisé dans des conditions de confort, de propreté et d'hygiène satisfaisantes. En effet, le produit qui était en contact avec la paroi de l'opercule se retrouve, dès la déchirure de la portion annulaire, sur le dessus de ce qui est devenu un bouchon, ce qui impose à l'utilisateur de commencer par laver ce bouchon s'il ne veut pas se salir les mains. D'autre part, ce tube étant destiné à une distribution au moindre coût, n'est pas protégé individuellement par un suremballage. Ainsi, il est exposé directement à l'air libre dans les entrepôts ou sur les rayonnages et, au cours de ce stockage, l'opercule en forme de chapeau renversé est susceptible de recueillir de la poussière qui adhère à la paroi interne de la jupe cylindrique extérieure.

Lorsque l'opercule est utilisé après déchirure comme bouchon, cette paroi interne entre directement en contact avec la paroi externe du goulot, qui elle-même est restée exposée à la poussière pendant toute la durée du stockage du tube. Il y a un risque important de salissure du produit qui se trouve à proximité de l'orifice du goulot, ce qui nuit aux conditions de propreté habituellement attendues de l'utilisation d'un tube, et peut même conduire dans certains cas à une non-conformité vis-à-vis des règles d'hygiène, puisqu'il y a risque de contamination du produit.

Dans le second domaine d'application, celui des récipients pour échantillons, une grande partie des échantillons de produits cosmétiques est présentée actuellement sous forme de simples pochettes difficiles à déchirer et non réutilisables.

Contrairement à ces simples pochettes, l'échantillon envisagé est un véritable récipient facile à déboucher et réutilisable plusieurs fois. De plus, il présente l'avantage d'avoir une forme proche du conditionnement du produit effectivement commercialisé. Certes, des récipients pour échantillons existent à l'heure actuelle mais leur réalisation ne diffère pas de celle du récipient commercial: elle nécessite une fabrication séparée du récipient et du bouchon, avec un dispositif d'inviolabilité spécifique coûteux. Le coût de fabrication de tels récipients pour échantillons ne se justifie que dans l'industrie du luxe. Or, on recherche ici à proposer des récipients pour les échantillons de produits cosmétiques de grande distribution ou encore pour les petites doses de produits d'hygiène ou d'entretien proposées dans l'hôtellerie.

Qu'il s'agisse de tubes souples ou de récipients pour échantillons, il s'agit donc de les réaliser à un moindre coût, quelles que soient leur forme et leur matière, mais en respectant les critères suivant: préserver à tout moment la propreté du produit continu, tant en stockage qu'en restitution au travers de l'orifice, avoir un témoin d'inviolabilité et un opercule réutilisable comme bouchon après déchirure.

### PROBLEME POSE

La demanderesse a donc cherché à réaliser une tête économique de tube souple ou de tout autre récipient, facile à fixer sur le tube souple ou le récipient, comportant un goulot constamment protégé de la poussière, munie d'un témoin d'inviolabilité et surmontée d'un opercule qui, après déchirure facile, peut être utilisé comme bouchon fermant hermétiquement et proprement le tube tout au long de son utilisation.

### EXPOSE DE L'INVENTION

Un premier objet de l'invention concerne un procédé de fabrication tel qu'exprimé à la revendication 1 qui aboutit à la réalisation d'une tête munie d'au moins une jupe, celle-ci, soit seule, soit attachée au corps d'une capsule, étant solidarisée définitivement par encliquetage sur la tête, à proximité de l'opercule.

La tête est moulée avec un moule inférieur central qui définit sa surface intérieure et un jeu de moules supérieurs, central et périphériques, qui définissent sa surface extérieure. La tête est composée d'une épaule et d'un goulot. L'épaule a une extrémité ouverte destinée à être fixée par tout moyen connu sur l'extrémité ouverte du récipient. Si ce dernier est un corps de tube souple ou tout autre récipient en matière plastique compatible en fusion avec la matière plastique de la tête, la fixation se fait de préférence par fusion: surmoulage, compression moulage, soudage thermique, soudage haute fréquence ou tout autre moyen de soudage adapté. Si le récipient est en une autre matière, en verre, en métal ou en matière plastique non compatible en fusion, la fixation peut être effectuée par collage mais, de préférence, on prolonge l'épaule par des moyens de solidarisation complémentaires de ceux du récipient, tels que des moyens de vissage ou d'encliquetage.

Le goulot a une forme quelconque. Il possède, près de l'orifice, un bord intérieur annulaire, borné sur son extrémité supérieure par une portion annulaire déchirable qui le relie à un opercule surmontant l'orifice du goulot.

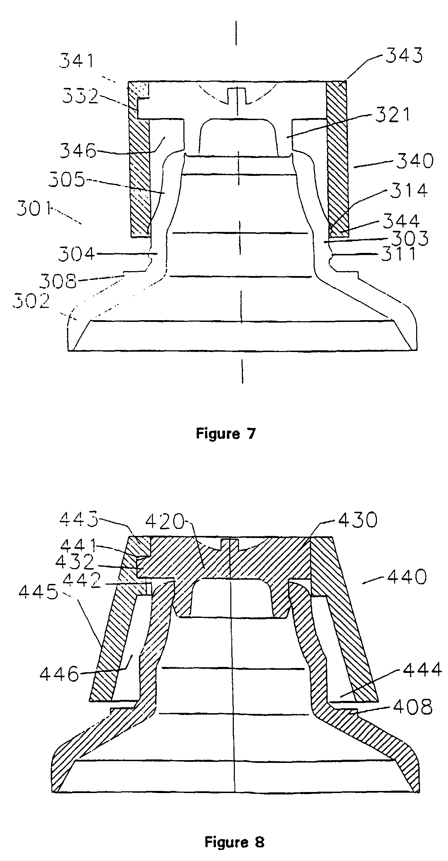

Le plateau, situé dans le prolongement de l'opercule, est moulé en continuité de matière avec ce dernier. Le plateau et l'opercule s'étendent sensiblement perpendiculairement à l'axe de l'orifice. Le contour périphérique du plateau, hors ergots, englobe le contour externe de la section supérieure du goulot, située près de l'orifice. C'est en ce sens que nous avons écrit: "l'opercule est prolongé au-delà de la paroi externe du goulot". Ainsi, si le goulot n'est pas parfaitement cylindrique, il est tout-à-fait possible que sa base soit beaucoup plus étendue que son extrémité portant l'orifice, ce qui fait que la périphérie dudit plateau peut se retrouver à l'intérieur d'un cylindre fictif ayant sa génératrice parallèle à l'axe du goulot et ayant pour directrice la base du goulot (voir figure 8).

Dans un mode de réalisation préféré de l'invention la périphérie du plateau est d'autre part munie d'au moins trois ergots qui, lorsqu'ils sont engagés dans des cavités réalisées sur la paroi interne de la jupe, bloquent tout mouvement relatif, en rotation ou en translation, de ladite jupe par rapport au plateau.

La jupe a une extrémité ouverte, destinée à être présentée en premier au moment de l'enfilage de la jupe autour du plateau. Nous appellerons cette extrémité "extrémité première" et l'autre extrémité "extrémité seconde". La paroi interne de la jupe est, au moins partiellement, cylindrique, de génératrice parallèle à l'axe du goulot, la directrice épousant la forme de la périphérie, hors ergots, du plateau en prolongement de l'opercule. La partie cylindrique de la paroi interne est munie d'au moins trois cavités destinées à loger lesdits ergots. La distance entre ces cavités et l'extrémité première est fonction de la hauteur de goulot à protéger. Ces cavités peuvent être traversantes ou non.

La jupe, une fois enfoncée par son extrémité première autour du plateau, entoure la surface extérieure du goulot. La forme de l'extrémité première de la jupe, est définie en fonction de la hauteur de goulot à protéger de telle sorte que la jupe arrive à proximité de la surface du goulot en fin d'enfoncement, sans toutefois la toucher. Une meilleure efficacité de la protection du goulot est obtenue en choisissant pour contour de l'extrémité première de la jupe, le contour de la section du goulot correspondant au niveau où ladite extrémité première arrive en fin d'enfoncement, dilaté de quelques dixièmes de millimètres vers l'extérieur.

L'extrémité seconde de la jupe peut être ouverte ou bien reliée en continuité de matière au fond d'une capsule. La capsule, outre son fond et ladite jupe, peut également être munie d'une ou plusieurs jupes extérieures, destinées à sa préhension facile et à conforter l'aspect esthétique de l'ensemble du récipient.

La jupe a une paroi extérieure de forme quelconque, compatible avec les formes imposées à la paroi intérieure aux niveaux de l'extrémité première et de la partie cylindrique, décrites plus haut. Elle doit être suffisamment mince et souple au regard des ergots de façon à ne pas déformer ces derniers lors de l'enfilage de la jupe.

Les ergots du plateau et les cavités de la jupe sont des moyens complémentaires de solidarisation par bloquage en translation et en rotation. Lorsque la jupe est enfoncée autour du plateau jusqu'à immobilisation, il y a solidarisation en rotation et en translation de la jupe et de l'ensemble opercule + plateau. Les cavités peuvent être traversantes: les lumières ainsi formées permettent de loger des ergots de grande longueur, ce qui améliore la solidarisation de la jupe et de la tête. Toutefois, on peut choisir de conserver ces cavités borgnes pour des raisons liées à l'aspect esthétique de la périphérie du bouchon. D'autre part, ergots et cavités sont présentés ici en tant que moyens complémentaires de solidarisation définitive: rien n'empêche d'intervertir leurs positions respectives, c'est-à-dire de munir la jupe d'ergots et le plateau de cavités, ou encore de munir le plateau et la jupe de tous autres moyens complémentaires de solidarisation par bloquage en translation et en rotation, tels que des combinaisons de cannelures complémentaires longitudinales et de rainures/nervures circonférentielles.

De préférence, lorsque la jupe est attachée au reste d'une capsule, la partie cylindrique de sa paroi interne s'étend jusqu'à l'extrémité seconde et les cavités, réalisées sur ladite paroi interne cylindrique, se trouvent à proximité de ladite extrémité seconde. Ainsi, lorsque la jupe a été enfoncée autour du plateau jusqu'à piégeage des ergots dans les lumières ou cavités, la liaison assurée par les ergots et les cavités est suffisamment rigide et proche du fond de capsule pour transmettre efficacement l'effort appliqué sur l'enveloppe externe de la capsule destiné à la déchirure de la portion annulaire.

Lorsque la jupe est réalisée seule, avec extrémité seconde ouverte, les cavités peuvent être réalisées à une distance plus ou moins grande de l'extrémité seconde, sans toutefois être inférieure à l'épaisseur de la jupe. Dans ce cas, cette jupe constitue la jupe du futur bouchon et l'ensemble opercule + plateau, une fois détaché de la tête, en constitue le fond. La liaison assurée par les ergots et les cavités est rigide. L'utilisateur applique un effort directement sur la jupe, de préférence à proximité du plateau. Cet effort est transmis au plateau grâce à la liaison rigide ergot-cavités puis, amplifié par un effet "bras de levier" dû à la géométrie du plateau, il entraîne la déchirure de la portion annulaire par mouvement relatif de l'ensemble plateau + opercule par rapport au goulot.

De façon à faciliter la déchirure, le bord interne annulaire du goulot et l'ensemble opercule + plateau sont nettement plus épais que la portion annulaire déchirable. Ainsi, ils se comportent comme des éléments coques résistant aux efforts et les contraintes se concentrent au niveau de la portion annulaire.

Le goulot possède, prés de l'orifice, un bord intérieur annulaire relié par la portion annulaire déchirable à un opercule qui surmonte l'orifice du goulot. L'opercule comporte une portion transitoire entre la partie en prolongement du plateau et la portion annulaire déchirable. Cette portion transitoire est soit un têton si le diamètre de l'orifice est faible, par exemple dans le cas des récipients pour échantillon, soit une couronne si le diamètre est supérieur, par exemple dans le cas de tubes pour pâte dentifrice.

Têton ou couronne ont un axe de symétrie coïncidant avec l'axe de l'orifice. Après déchirure de la portion annulaire, il ou elle sert de moyen d'étanchéité.

Têton ou couronne peuvent également servir au rebouchage par remise en place dans l'orifice et enfoncement supplémentaire avec forcement mais cette fonction peut être assurée ailleurs, par exemple avec des moyens complémentaires d'encliquetage situés sur la paroi externe du goulot et sur la paroi interne de la jupe à proximité de son extrémité première.

Dans une modalité de l'invention, on réalise au moindre coût des tubes pour échantillons en choisissant de préférence une forme particulière du têton ou de la couronne, permettant d'une part de cumuler les fonctions fermeture et étanchéité et d'autre part d'assurer une fonction de témoin d'inviolabilité. Cette forme est déjà décrite dans FR2649676: la périphérie de la couronne ou du têton comporte successivement, en partant de la portion annulaire déchirable et en allant vers l'attache au fond de l'opercule: une première portion tronconique, puis une portion cylindrique de diamètre supérieur à celui de l'orifice, que nous appellerons surjonc, un épaulement de retrait, et enfin une portion en retrait cylindrique ou tronconique. Le têton ou la couronne sont attachés au goulot par l'extrémité supérieure du bord intérieur annulaire délimitant l'orifice. L'attache est fine. Elle constitue la portion annulaire déchirable, que l'on peut décrire par une zone de faible épaisseur s'étendant de part et d'autre d'un tronc de cône, en prolongement de la première portion tronconique du têton ou de la couronne et ayant une longueur comprise entre 0,1 et 0,5 millimètres, séparant la surface intérieure de la surface extérieure de la tête.
Après déchirure, le goulot voit ainsi son orifice délimité par un micro-chanfrein tronconique situé sur l'extrémité supérieure du bord annulaire intérieur, résultant de la rupture de la portion annulaire. Le bord intérieur annulaire a une hauteur 5 à 10 % plus faible que la portion en retrait cylindrique ou tronconique du têton ou de la couronne, qui est elle-même tronconique de demi-angle de cône compris entre 1 et 3°. Le petit diamètre de l'épaulement en retrait est d'autre part plus fort, typiquement de 3 à 6%, que le diamètre de l'orifice, le diamètre du surjonc étant alors supérieur de 6 à 10 % au diamètre de l'orifice, de façon à assurer le verrouillage en fin d'enfoncement, ce qui facilite d'autre part l'insertion de la portion en retrait par une dilatation préalable un peu plus forte de cet orifice.
Tête et jupe, en matière plastique, ont ainsi été obtenues par moulage, le jeu de moules utilisés ayant imposé les formes respectives décrites. Après mise en forme de la tête et de la jupe, la jupe est amenée au regard du plateau puis enfilée par son extrémité première autour de celui-ci jusqu'à immobilisation, celle-ci étant causée par l'introduction des ergots du plateau dans les cavités de la jupe. Si l'enfoncement de la jupe autour du plateau est effectué peu de temps après la formation de la tête, le goulot est protégé dès la réalisation de la tête du récipient. De plus, si, au voisinage du niveau de l'extrémité première de la jupe solidarisée à l'opercule, le goulot est muni d'un épaulement, il est possible, par l'observation de l'intervalle séparant d'une part cet épaulement et d'autre part l'extrémité première de la jupe, de vérifier par un rapide contrôle visuel si l'opercule a été déchiré. En effet, ledit intervalle n'est pas le même avant et après la déchirure de la portion annulaire. On obtient ainsi un témoin d'inviolabilité peu coûteux.

Dans une autre modalité de l'invention, on facilite les rebouchages multiples et on améliore l'étanchéité en plaçant les moyens complémentaires d'encliquetage loin du téton ou de la couronne qui n'a plus qu'un rôle d'étanchéité. Ces moyens sont situés sur la paroi externe du goulot et sur la paroi interne de la jupe à proximité de son extrémité première. Dans ce cas, le têton ou la couronne a une forme plus simple, cylindrique, sans surjonc et sans épaulement en retrait. Son diamètre est supérieur de 3 à 6%, au diamètre de l'orifice.

Quelle que soit la forme choisie pour le têton ou la couronne, l'extrémité première de la jupe, un fois celle-ci enfoncée autour du plateau jusqu'à immobilisation des ergots dans les cavités, surplombe le sommet de l'épaule d'une hauteur voisine de la hauteur du têton ou de la couronne de l'opercule. Ceci permet de protéger efficacement le goulot durant le stockage.

Dans le cas de tubes ou de récipients souples, la déchirure facile est favorisée par une simple rotation autour de l'axe de l'orifice. De préférence, la forme de la section particulière du goulot qui définit la forme de la paroi interne de l'extrémité première de la jupe et la forme de la périphérie du plateau en prolongement de l'opercule sont choisies avec un axe de symétrie coïncidant avec l'axe de l'orifice. La répartition des ergots et cavités respecte cette symétrie d'axe.

Ainsi, si le plateau et la section particulière du goulot sont circulaires, la paroi interne de la jupe est soit totalement cylindrique à section circulaire, soit partiellement cylindrique et partiellement tronconique. Les ergots et cavités sont de préférence régulièrement répartis angulairement, par exemple à 120° s'ils sont les uns et les autres au nombre de trois. Leur nombre peut cependant être supérieur à trois, en fonction de la forme générale choisie: quatre pour une ellipse, un carré ou un octogone, cinq pour un pentagone, etc...

On peut également donner à l'ensemble du goulot une forme respectant la symétrie d'axe. Il peut ainsi être cylindrique, au sens géométrique général du terme, c'est-à-dire avec une courbe directrice quelconque, les sections les plus courantes étant par exemple circulaires, elliptiques ou polygonales. Il peut également être complètement en forme de canule ou d'ajutage, reliant l'épaule à l'orifice de distribution, les sections perpendiculaires à l'axe se déduisant les unes des autres par homothétie. Il peut encore être cylindrique à sa base, près de l'épaule, puis avoir une partie en forme d'ajutage près de l'orifice.

Une modalité de l'invention est particulièrement avantageuse car elle entraîne une diminution du coût de fabrication décisive. Dans cette modalité, la jupe, dont la paroi interne est cylindrique, est moulée simultanément avec la tête, dans une position temporaire qui rend l'ensemble facilement moulable, avec des moules faciles à réaliser et un démoulage aisé. La jupe forme ainsi dans cette position temporaire un chapeau renversé avec le plateau, l'extrémité première de la jupe étant reliée au plateau par quelques ponts d'amenée de matière au moment du moulage. Le jeu de moules comprend un moule supérieur central formant la paroi interne du chapeau renversé, un jeu de moules supérieurs périphériques formant la paroi externe de la jupe du chapeau renversé et du reste de la tête et enfin un moule inférieur central, formant l'intérieur de la tête.

De préférence, on effectue le démoulage puis on reprend l'ensemble moulé complètement refroidi en l'enfilant sur un noyau ayant une forme identique au moule central inférieur, qui va servir d'appui à la tête. Une plaque vient s'appuyer sur l'extrémité seconde de la jupe et effectue un mouvement axial en direction du tube, imposant la rupture des ponts qui reliaient la jupe au plateau puis l'enfoncement de la jupe autour du plateau jusqu'à immobilisation des ergots dans les cavités. Le refroidissement complet de l'ensemble moulé permet de couper des ponts plus épais. Ces derniers servant à l'amenée de matière dans la jupe au cours du moulage permettent s'ils sont plus épais d'accélérer les cadences de fabrication et améliorent les conditions économiques de fabrication, bien que le refroidissement complet de l'ensemble moulé impose un dispositif supplémentaire dans la chaîne de fabrication.

Dans d'autres modalités de l'invention, la jupe est fabriquée séparément, soit isolée, soit attachée à une capsule complète. De préférence la partie cylindrique de la paroi interne est munie de rainures longitudinales s'étendant à partir des cavités en direction de l'extrémité première de la jupe. Ces rainures permettent de guider les ergots jusqu'à leur piégeage dans les cavités. Elles ont une profondeur inférieure à celle des cavités et une largeur au moins égale à celle des ergots. Ces rainures amincissent localement la jupe, qui est facilement déformable au regard des ergots. La jupe chevauche ainsi les ergots sans les déformer.

Un deuxième objet de l'invention concerne les tubes souples et récipients munis de la tète fabriquée suivant l'invention. Le tube souple et le récipient a une tête en matière plastique comportant un goulot dont l'orifice de sortie est relié par une portion annulaire déchirable à un opercule jouant le rôle d'obturateur étanche avant rupture de ladite portion annulaire et pouvant servir ensuite au rebouchage dudit orifice, caractérisé en ce que ladite tête est munie d'une jupe, dès avant la déchirure de ladite portion annulaire ladite jupe entourant ledit goulot, étant munie de moyens de solidarisation, par exemple par encliquetage, avec l'opercule par l'intermédiaire d'un plateau qui prolonge ledit opercule et qui est muni de moyens de solidarisation, par blocage en rotation et translation axiale, complémentaires à ceux de la jupe, l'ensemble jupe, opercule et plateau constituant un bouchon de rebouchage après déchirure de ladite portion annulaire .

i D'autres caractéristiques et avantages apparaîtront dans la description des dispositifs particuliers de l'invention donnés ci-après à titre d'exemples nullement limitatifs.

La figure 1 représente une tête de tube selon l'invention avant déchirement de la zone de rupture (coupe axiale)

La figure 2 représente la tête de tube de la figure 1 après déchirement de la zone de rupture et enfoncement du bouchon constitué par l'ensemble opercule + plateau + jupe (coupe axiale).

La figure 3 représente une tête de tube semblable à celle de la figure 1 juste après moulage et avant enfoncement de la jupe autour du plateau, la jupe ayant ici des cavités borgnes (coupe axiale).

La figure 4 représente l'extrémité supérieure d'un tube avec un corps souple et une autre tête de tube selon l'invention, avec un goulot allongé en forme de canule, juste après moulage et avant enfilage de la jupe (coupe axiale)

La figure 5 représente le voisinage de la portion annulaire déchirable avant rupture

La figure 6 représente une tête selon l'invention fixée sur l'extrémité ouverte en forme de bourrelet d'un récipient en verre.

La figure 7 représente une tête de tube réalisée selon l'invention, avant déchirement de la zone de rupture, équipée d'une jupe permettant d'obtenir un bouchon esthétique et facile à reboucher.

La figure 8 représente une tête de tube réalisée selon l'invention, après déchirement et enfoncement de la jupe fabriquée séparément, ladite jupe ayant une paroi externe de forme tronconique.

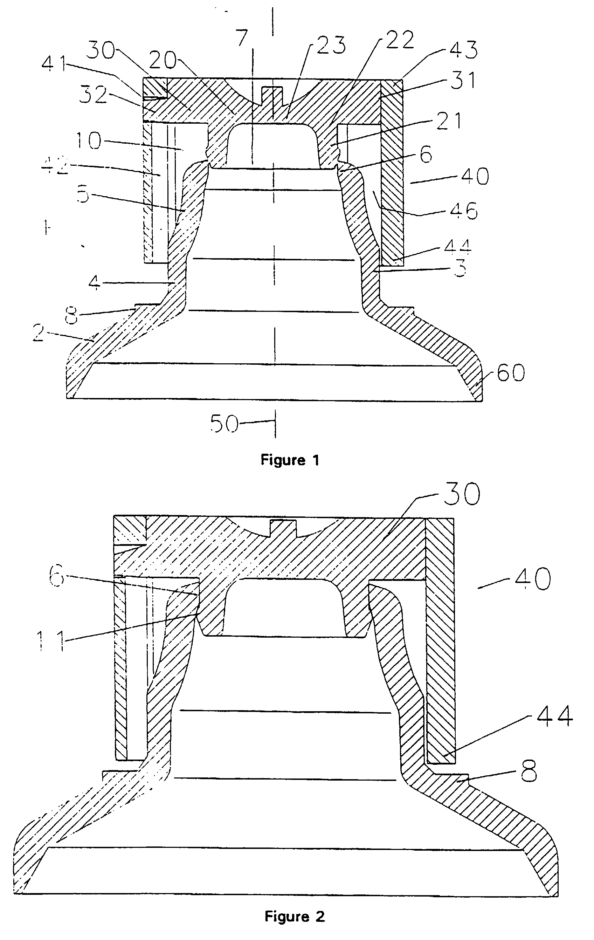

### Réalisation selon l'invention d'une tête de tube pour pâte dentifrice (Figures 1, 2, 3, 7)

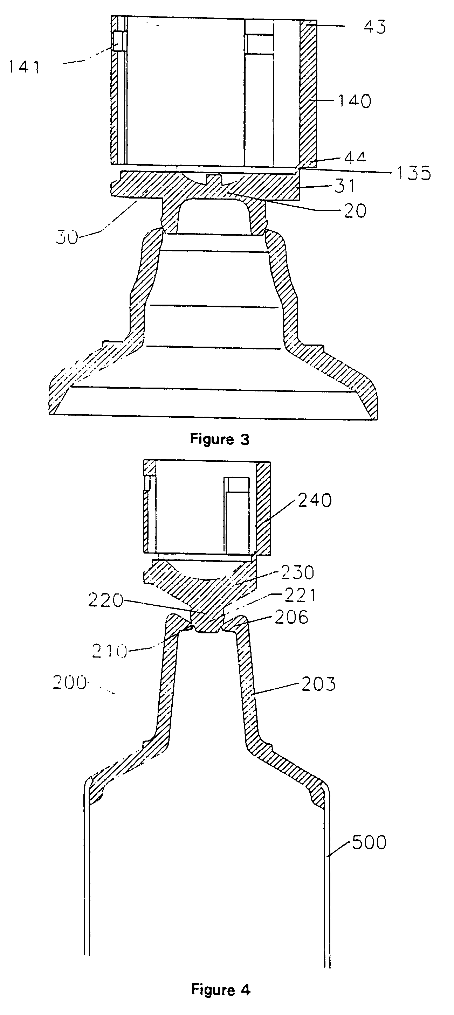

Le tube est composé d'un corps souple **500** , identique à celui figurant figure 4, et d'une tête 1, identique à celle représentée en figure **1**, tous deux en matière plastique. Le corps souple **500**, cylindrique, est réalisé par soudage longitudinal d'un film multicouche ayant une couche barrière en EVOH. L'une de ses extrémités est fixée à la tête et l'autre est encore ouverte. Il est livré ainsi au conditionneur de pâte dentifrice. Le corps souple **500** a un diamètre compris entre 25 et 35 mm et une épaisseur voisine de 0,3 mm.

Le corps et la tête ont pour même axe de symétrie, l'axe **50** de l'orifice. La figure **1** représente la tête 1 du tube souple dans son état de livraison, c'est-à-dire munie d'une jupe **40** encliquetée.

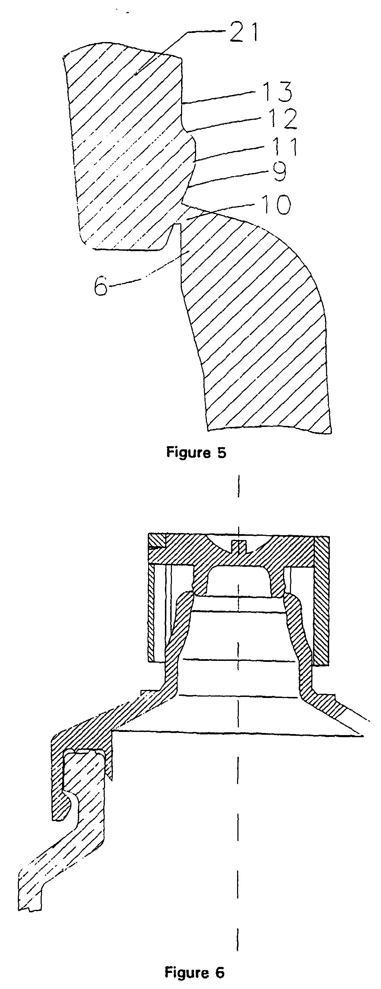

Elle comporte une épaule **2** dont l'extrémité ouverte **60** est destinée à être fixée sur l'extrémité du corps souple **500** du tube. Elle comporte également un goulot **3**, dont la base **4** est cylindrique circulaire et le sommet est en forme d'ajutage **5** axisymétrique. Le goulot **3** a un bord intérieur annulaire **6** qui délimite un orifice **7** de diamètre 7,6 mm. Le bord intérieur annulaire **6** est relié par une portion annulaire déchirable **10** à la couronne **21** de l'opercule **20**. La portion annulaire déchirable **10** ainsi que la couronne **21** sont détaillées en figure 5: la périphérie de la couronne **21** comporte successivement, en partant de la portion annulaire déchirable **10** et en allant vers l'attache **22** au fond **23** de l'opercule: une première portion tronconique **9**, de demi-angle au sommet 20°, puis le surjonc **11**, un épaulement de retrait **12**, et enfin une portion en retrait **13** légèrement tronconique.

La couronne **21** est attachée au goulot **3** par l'angle supérieur du bord intérieur annulaire **6** délimitant l'orifice **7**. L'attache **10** est fine. Elle constitue la portion annulaire déchirable, que l'on peut décrire par une zone de faible épaisseur s'étendant de part et d'autre d'un tronc de cône, en prolongement de la première portion tronconique **9** du téton ou de la couronne et ayant une longueur de 0,3 millimètres, séparant la surface intérieure de la surface extérieure de la tête. La portion en retrait tronconique **13** de la couronne a un demi-angle de 3°. Le petit diamètre de l'épaulement en retrait **12**, de 7,9 mm, est plus fort que le diamètre de l'orifice **7**. Le diamètre du surjonc **11** est égal à 8,2 mm.

Le plateau **30** est situé dans le prolongement de l'opercule **20**. Il est moulé en continuité de matière avec ce dernier. Le plateau **30** et l'opercule **20** s'étendent perpendiculairement à l'axe **50** de l'orifice. La périphérie **31** du plateau est circulaire, elle a un diamètre de 13,5 mm. Elle est munie d'ergots **32** en saillie radiale, c'est-à-dire débordant radialement du plateau de 1,5 mm.

La jupe **40** a pour diamètre externe 16 mm et pour épaisseur hors rainures, 1 mm. Elle est munie de cavités **41**, qui sont dans les figures 1 et 2 des fenêtres traversantes, situées à deux millimètres du bord de l'extrémité seconde **43**. Sur la paroi interne **46** de la jupe **40**, des rainures longitudinales **42** de profondeur 0,35 mm s'étendent de l'extrémité première **44** de la jupe **40** aux fenêtres traversantes **41**.

La figure 3 représente une jupe **140**, géométriquement identique à la jupe **40** des deux premières figures mais qui est moulée en même temps que la tête, dans une position temporaire qui lui donne l'allure d'un chapeau renversé. Ici, ses cavités **141** sont représentées non débouchantes. Non seulement la tête **1** et la jupe **140** sont moulées simultanément mais encore la fixation de la tête sur le corps souple **500** du tube se fait également au cours de cette phase, par surmoulage, c'est-à-dire par soudure autogène, en utilisant l'outillage suivant:
- Un moule inférieur central, destiné à définir la géométrie de la surface intérieure de la tête, est introduit à l'intérieur du corps souple **500**.
- Un jeu de moules supérieurs périphériques est mis en place pour définir la surface extérieure de l'épaule **2**, du goulot **3**, de l'ensemble opercule + plateau (**20**;**30**), et de la jupe **140**.
- Un outillage central supérieur est mis en place également, pour définir la paroi interne de la jupe **140** et la paroi supérieure de l'opercule **20** et du plateau **30**.
- Des ponts de liaison sont ménagés entre le moule central supérieur et les moules périphériques supérieurs, de façon à laisser des passages de matière de faible section: 0,3 à 0,8 mm², qui après démontage de ce jeu de moules supérieurs laisse une série de trois ponts **135** entre la périphérie **31** du plateau **30** et l'extrémité première **44** de la jupe **140**.

Les moules supérieurs sont ensuite écartés pour le démoulage. De façon à limiter les contraintes liées au démoulages des zones de faible section situées en contre-dépouille, on utilise de préférence des rainures qui s'étendent au-delà des cavités et débouchent au bord de l'extrémité seconde **43** de la jupe **140**.

Le moule inférieur est maintenu en place pour servir d'appui à la tête. Une plaque vient en appui sur l'extrémité seconde **43** de la jupe et impose à la jupe un mouvement d'enfoncement en direction du tube. Les ponts **135** cèdent et la jupe (**40**; **140**) s'enfile autour du plateau, les ergots **32** du plateau **30** s'appuyant sur la paroi de fond des rainures **42** et déformant faiblement et localement la section de la jupe (**40**; **140**) jusqu'à ce que les cavités (**41**;**141**) arrivent à leur niveau. A cet instant, les ergots **32** sont piégés dans les cavités (**41**; **141**) et bloquent tout mouvement relatif de la jupe par rapport à la tête **1**.

Pour que les ponts **135** cèdent facilement, on a choisi pour matériau de la tête de tube une matière plastique moulable frangible, en l'occurrence du polyéthylène basse densité (PEBD). Le polyéthylène haute densité ou le polypropylène pourraient également convenir, additionnés de charges, telles que des particules de talc.

Le tube est livré ainsi au conditionneur de pâte dentifrice, qui remplit le tube par l'extrémité encore ouverte du corps souple du tube puis scelle celle-ci. Le tube est ensuite mis dans le commerce et, pendant toute la phase de transport et de stockage avant la fourniture au consommateur final, son goulot est parfaitement protégé par la jupe. En observant la distance entre l'extrémité première **44** de la jupe et l'épaulement **8** situé à la base du goulot **3**, l'utilisateur peut immédiatement contrôler l'inviolabilité du tube, car cette distance est très faible lorsque le tube est désoperculé, comme le montre la figure 2.

Lors de la première utilisation du produit contenu dans le tube, l'utilisateur déchire la portion annulaire **10** en imposant un mouvement de rotation par rapport à l'axe du tube, par application des doigts sur la jupe (**40**). L'ensemble constitué par l'opercule, le plateu et la jupe (**20** ; **30**; **40**) est ainsi détaché du reste de la tête et peut être réutilisé en tant que bouchon. La couronne **21** sert de jupe d'étanchéité et de moyen de fermeture par verrouillage en fin d'enfoncement, le surjonc **11** étant bloqué sous le bord intérieur annulaire **6** délimitant l'orifice **7** du goulot **3**.

La tête de tube illustrée en figure 7 est une variante de celle illustrée en figure 1, conduisant à un bouchon plus esthétique et plus facile à reboucher. Elle est caractérisée par une jupe cylindrique **340** dont la paroi interne est sans rainures, une jupe d'étanchéité **321** droite et des moyens d'encliquetage complémentaires (**311** et **314**) situés sur la paroi externe du goulot **311** et sur la paroi interne de la jupe **340**, à proximité de son extrémité première **314**. La jupe cylindrique **340** étant moulée simultanément avec la tête, il n'est pas nécessaire de guider les ergots **332** vers les cavités **341** lors de l'enfoncement de la jupe. Les moyens d'encliquetage complémentaires dissociés de la jupe d'étanchéité permettent d'obtenir un effort de fermeture moindre et une étanchéité améliorée pour des tubes à fermetures multiples et répétées.

### Réalisation selon l'invention d'une tête de tube pour application directe de crème cosmétique sur le cuir chevelu (Figure 4)

La tête de tube **200** de la figure 4 diffère de la précédente par son goulot **203** , en forme de canule. Son extrémité est occupée par un bord intérieur annulaire **206** légèrement concave, relié par l'intermédiaire d'une portion annulaire déchirable **210** à un téton **221** de l'opercule **220**, prolongé par un plateau **230**, suivant un tronc de cône dont le demi-angle au sommet est ouvert, de l'ordre de 60°. La concavité du bord intérieur annulaire **206** rend l'extrémité de la canule non traumatisante et permet ainsi l'application directe du produit sur la peau, en l'occurrence ici sur le cuir chevelu.

Comme dans l'exemple précédent, la jupe **240** est enfoncée autour du plateau et assure la propreté de l'extrémité applicatrice de la cannelure.

### Réalisation selon l'invention d'une tête de tube souple de petite taille pour échantillon de produit cosmétique, d'hygiène ou de parapharmacie.

De tels tubes ont une matière et une configuration globalement identique à celles des tubes précédents. Ils diffèrent par des dimensions plus faibles, qui entraînent quelques adaptations de fabrication:
- le corps souple **500** a un diamètre de 16 mm et une épaisseur voisine de 0,3 mm.
- le goulot **3**, dont la base cylindrique 4 a un diamètre de 8mm, est relié par un ajutage **5** à un bord intérieur annulaire **6** qui délimite un orifice **7** de diamètre 2,5 mm. Le bord intérieur annulaire **6** est relié par une portion annulaire déchirable **10** à un téton attaché à l'opercule **20**. Le profil extérieur du têton suit la configuration décrite en figure 5.
- la jupe a un diamètre externe de 11,5 mm, une épaisseur hors rainure de 1 mm, des rainures **42** profondes de 0,35 mm, et trois fenêtres **41** , ici traversantes, situées à 1 mm du bord de l'extrémité seconde de la jupe **43**.
- le plateau **30** a un diamètre hors ergots de 9,5 mm et trois ergots **31** en saillie radiale 1 mm

### Réalisation selon l'invention d'une tête de récipient pour échantillon de produit cosmétique, pharmaceutique ou d'entretien (Figure 6)

De tels récipients peuvent être en métal, en verre, en plastique ou en toute autre matière. La forme est également quelconque: il suffit de mouler une extrémité d'épaule adaptée à la géométrie de l'extrémité ouverte du récipient. Pour des raisons esthétiques, le bouchon peut prendre une forme en harmonie avec le reste du récipient, par exemple une section elliptique, polygonale (triangle, carré, hexagone, octogone, etc...). La jupe peut soit conserver la forme circulaire des exemples précédents, et dans ce cas elle peut être rattachée à une capsule moulée séparément de la tête, soit prendre directement la forme voulue avec le plateau qui lui est associé. Dans ce cas, le nombre d'ergots du plateau et de cavités de la jupe, de préférence non débouchantes, est fonction de la géométrie recherchée: trois pour les formes circulaires, triangulaires et hexagonales, quatre pour les formes carrées et octogonales, cinq pour pour les formes pentagonales, etc...

La figure 6 représente la section de l'extrémité ouverte d'un récipient en verre. Elle est en forme de bourrelet extérieur, du type "pénicilline". L'extrémité de la tête de tube réalisée selon l'invention est adaptée au bourrelet de façon à être fixée sur le récipient par encliquetage. D'autres solutions existent faisant appel au sertissage d'une couronne intermédiaire.

On peut également adapter par encliquetage de telles têtes sur des récipients en plastique ou en métal.

La déchirure de l'opercule nécessitant un mouvement de rotation, on munit cette tête d'un dispositif de blocage en rotation, par exemple avec une encoche radiale qui vient se bloquer sur une aspérité de la paroi du récipient.

### Réalisation selon l'invention d'une tête de tube souple pour produit cosmétique, d'hygiène ou de parapharmacie (Figure 8)

La figure 8 représente une tête de tube réalisée selon l'invention avec une jupe 440 dont la paroi externe **445**, de forme tronconique, permet d'obtenir un bouchon de forme classique, ne heurtant pas les habitudes du consommateur. La jupe **440** a été réalisée séparément. Sa paroi interne **446**, cylindrique à proximité de son extrémité seconde **443**, est munie de rainures **442** qui permettent de guider les ergots **432** vers les cavités **441** non débouchantes lors de l'enfoncement de la jupe autour du plateau prolongeant l'opercule. La paroi externe peut être munie de stries facilitant la préhension. La partie cylindrique de la paroi interne est avantageusement de hauteur limitée: une hauteur sensiblement égale à 3 fois la hauteur de l'ergot suffit.

### AVANTAGES

- fabrication économique de têtes de tubes destinées à la grande distribution de produits d'hygiène bon marché, par exemple pour les pays du tiers monde
- fabrication économique de têtes de récipients d'échantillons distribués gratuitement pour tester de nouveaux produits cosmétiques, parapharmaceutiques, d'hygiène ou d'entretien.
- fabrication économique de têtes de récipients pour produits pharmaceutiques.
- fabrication économique de têtes de récipients ou tubes souples contenant des produit d'hygiène et d'entretien dans l'hôtellerie et l'industrie du voyage.
- propreté des têtes des récipients, notamment du goulot au voisinage de l'orifice de distribution, à tout moment, avant et après désoperculage.
- témoin d'inviolabilité visible et conforme aux réglementations existantes
- propreté assurée même avec une géométrie non axisymétrique grâce à la forme de la jupe bien adaptée à la périphérie du goulot.

## Revendications

1. Procédé de fabrication d'une tête (1) munie d'au moins une jupe (40) en matière plastique comportant une extrémité ouverte (60) destinée à être fixée par la suite sur l'extrémité ouverte d'un récipient ou d'un tube souple (500) et comportant un goulot (3) dont l'orifice de sortie (7) est relié par une portion annulaire déchirable (10) à un opercule (20) jouant le rôle d'obturateur étanche avant rupture de ladite portion annulaire et pouvant ensuite servir au rebouchage dudit orifice, ledit opercule (20) étant prolongé au-delà de la paroi externe du goulot par un plateau (30), ledit procédé comportant une étape de moulage de la tête (1) en matière plastique, une étape de mise en forme de la jupe (40) en matière plastique, ladite jupe étant ouverte en une extrémité première (44), caractérisé en ce que:
a) la périphérie (31) du plateau (30) est délimitée par un contour qui a un axe de symétrie commun avec la portion annulaire déchirable (10) et est munie de moyens de solidarisation (32) avec ladite jupe;
b) la jupe (40) est réalisée dans une position temporaire par rapport audit plateau (30);
c) la paroi interne (46) de la jupe (40) est, au moins partiellement, cylindrique, sa section épousant la forme de la périphérie (31) du plateau (30), la partie cylindrique de la paroi interne (46) étant munie de moyens de solidarisation complémentaires de ceux dudit plateau (30);
d) après moulage de la tête (1) et mise en forme de la jupe (40), ladite jupe est amenée au regard du plateau (30) puis enfilée par son extrémité première (44) autour de celui-ci jusqu'à immobilisation, celle-ci étant causée par la coopération des moyens (32 et 41) de solidarisation complémentaires de la jupe (40) et du plateau (30), conduisant à un blocage en rotation et en translation axiale.

2. Procédé de fabrication d'une tête (1) selon la revendication 1, caractérisé en ce que lesdits moyens (32 et 41) de solidarisation complémentaires sont au moins trois ergots (32) sur la périphérie (31) du plateau (30) en prolongement de l'opercule (20) et au moins trois cavités (41) sur la partie cylindrique de la paroi interne (46) de la jupe (40).

3. Procédé de fabrication d'une tête (1) selon la revendication 2, caractérisé en ce que les cavités (41) sont réalisées sur la partie cylindrique (46) de la paroi interne (46) de ladite jupe, à proximité de son extrémité seconde (43).

4. Procédé de fabrication d'une tête (1) munie d'au moins une jupe (40;240) selon l'une quelconque des revendications 1 à 3, caractérisé en ce que l'opercule (20;220) comporte une portion transitoire, sous forme de couronne (21) ou de têton (221), adjacente à la portion annulaire déchirable (10;210), et qui sert, après déchirure de ladite portion annulaire, de moyen d'étanchéité.

5. Procédé de fabrication d'une tête (1) munie d'au moins une jupe (40;240) selon la revendication 4, caractérisé en ce que la portion transitoire, sous forme de couronne (21) ou de têton (221) sert d'autre part de moyen de fermeture de l'orifice par verrouillage en fin d'enfoncement.

6. Procédé de fabrication d'une tête (1) munie d'au moins une jupe (40) selon la revendication 5, caractérisé en ce que le goulot (3) comporte un épaulement (8), servant par simple observation de sa distance à l'extrémité première (44) de la jupe (40) de témoin d'inviolabilité.

7. Procédé de fabrication d'une tête (1) munie d'au moins une jupe (140) selon l'une quelconque des revendications 1 à 6, caractérisé en ce que
a) la jupe (140) est moulée simultanément avec la tète(1), dans une position temporaire qui lui fait prendre avec l'opercule (20) et le plateau (30) la forme d'un chapeau renversé, l'extrémité première (44) de la jupe étant reliée au plateau (30) par quelques ponts (135) d'amenée de matière au moment du moulage.
b) l'ensemble est démoulé, refroidi jusqu'à la température ambiante puis enfilé autour d'un noyau épousant la forme du moule inférieur central.
c) une plaque vient ensuite s'appuyer sur l'extrémité seconde (43) de la jupe (140) et effectue un mouvement axial en direction du tube, imposant la rupture des ponts (135) qui reliaient ladite jupe au plateau (30) puis l'enfoncement de ladite jupe autour dudit plateau jusqu'à immobilisation des ergots (32) dans les cavités (141).

8. Procédé de fabrication d'une tête (1) munie d'au moins une jupe (40) selon l'une quelconque des revendications 1 à 6, caractérisé en ce que la jupe (40) est munie, sur sa paroi interne (46), entre son extrémité première (44) et lesdites cavités (41), de rainures longitudinales (42), de profondeur inférieure à celle desdites cavités, et de largeur au moins égale à celle des ergots (32) du plateau (30).

9. Procédé de fabrication d'une tête (1) munie d'au moins une jupe (40) en matière plastique comportant une extrémité ouverte (60) destinée à être fixée par la suite sur l'extrémité ouverte d'un récipient ou d'un tube souple (500) et comportant un goulot (3) dont l'orifice de sortie (7) est relié par une portion annulaire déchirable (10) à un opercule (20) jouant le rôle d'obturateur étanche avant rupture de ladite portion annulaire et pouvant ensuite servir au rebouchage dudit orifice, comportant une étape de moulage de la tête (1) en matière plastique, une étape de mise en forme de la jupe (40) en matière plastique, ladite jupe pouvant être seule ou solidaire du corps d'une capsule complète, caractérisé en ce que:
a) l'opercule (20) est prolongé au-delà de la paroi externe du goulot par un plateau (30) dont la périphérie (31) est délimitée par un contour qui a un axe de symétrie commun avec la portion annulaire (10) déchirable et est munie de moyens de solidarisation (32) avec ladite jupe;
b) la jupe (40) est ouverte en une extrémité (44) et sa paroi interne (46) est, au moins partiellement, cylindrique, sa section épousant la forme de la périphérie (31), hors ergots, du plateau (30) en prolongement de l'opercule (20), la partie cylindrique de la paroi interne (46) étant munie d'au moins trois cavités (41) destinées à loger lesdits ergots;
c) après moulage de la tête (1) et de la jupe (40), ladite jupe est amenée au regard du plateau (30) puis enfilée par son extrémité première (44) autour de celui-ci jusqu'à immobilisation, celle-ci étant causée par la coopération des moyens (32 et 41) de solidarisation complémentaires de la jupe (40) et du plateau (30).

10. Tube souple ayant une tête (1) en matière plastique comportant un goulot (3) dont l'orifice de sortie (7) est relié par une portion annulaire déchirable (10) à un opercule (20) jouant le rôle d'obturateur étanche avant rupture de ladite portion annulaire et pouvant ensuite servir au rebouchage dudit orifice, caractérisé en ce que ladite tête est munie d'une jupe (40), ladite jupe entourant ledit goulot (3), étant munie de moyens de solidarisation (41) avec l'opercule (20) par l'intermédiaire d'un plateau (30) qui prolonge ledit opercule et qui est muni de moyens de solidarisation (32) complémentaires à ceux de la jupe, l'ensemble jupe (40), opercule (20) et plateau (30) constituant un bouchon de rebouchage après déchirure de ladite portion annulaire.

11. Récipient ayant une extrémité sur laquelle est fixée une tête (1) en matière plastique comportant un goulot (3) dont l'orifice de sortie (7) est relié par une portion annulaire déchirable (10) à un opercule (20) jouant le rôle d'obturateur étanche avant rupture de ladite portion annulaire et pouvant ensuite servir au rebouchage dudit orifice, caractérisé en ce que ladite tête est munie d'une jupe (40), ladite jupe entourant ledit goulot (3), étant munie de moyens de solidarisation (41) avec l'opercule (20) par l'intermédiaire d'un plateau (301 qui prolonge ledit opercule et qui est muni de moyens de solidarisation (32) complémentaires à ceux de la jupe, l'ensemble jupe (40), opercule (20) et plateau (30) constituant un bouchon de rebouchage après déchirure de ladite portion annulaire.

## Patentansprüche

1. Verfahren zur Herstellung eines mit mindestens einem Mantel (40) versehenen Kopfes (1) aus Kunststoff mit einem offenen Ende (60) zur anschließenden Befestigung auf dem offenen Ende eines Behälters oder einer weichelastischen Tube (500) und mit einem Ansatz (3), dessen Austrittsöffnung (7) über einen abreißbaren Ringabschnitt (10) mit einem Deckel (20) verbunden ist, der vor Abbrechen des Ringabschnitts als Dichtverschluss fungiert und danach als Abdeckung der Öffnung dienen kann, wobei der Deckel (20) über eine Platte (30) bis über die Außenwand des Ansatzes hinaus verlängert ist, Verfahren bestehend aus einem Pressschritt für den Kopf (1) aus Kunststoff und einem Formschritt für den Mantel (40) aus Kunststoff, wobei der Mantel an einem ersten Ende (44) offen ist, dadurch gekennzeichnet, dass :
a) der Umfang (31) der Platte (30) durch eine Außenlinie begrenzt ist, die mit dem abreißbaren Ringabschnitt (10) eine gemeinsame Symmetrieachse hat, und mit Mitteln (32) zur festen Verbindung mit dem Mantel versehen ist;
b) der Mantel (40) in einer vorläufigen Position in Bezug auf die Platte (30) ausgebildet ist;
c) die Innenwand (46) des Mantels (40) zumindest teilweise zylindrisch ist und ihr Teilabschnitt sich eng an den Umfang (31) der Platte (30) anschmiegt, wobei der zylindrische Teil der Innenwand (46) mit Mitteln zur festen Verbindung versehen ist, die die der Platte (30) ergänzen ;
d) nach Pressen des Kopfes (1) und Formen des Mantels (40) der Mantel vor die Platte (30) geführt und mit seinem ersten Ende (44) bis zur Verriegelung um diese herum gelegt wird, wobei die Verriegelung durch das Zusammenwirken der sich ergänzenden Mittel (32 und 41) zur festen Verbindung des Mantels (40) und der Platte (30) bewirkt wird, was zu einer Blockierung der Rotations- und axialen Translationsbewegung führt.

2. Verfahren zur Herstellung eines Kopfes (1) nach Anspruch 1, dadurch gekennzeichnet, dass die sich ergänzenden Mittel (32 und 41) zur festen Verbindung mindestens drei Stifte (32) am Umfang (31) der Platte (30) in Verlängerung des Deckels (20) und mindestens drei Hohlräume (41) auf dem zylindrischen Teil der Innenwand (46) des Mantels (40) sind.

3. Verfahren zur Herstellung eines Kopfes (1) nach Anspruch 2, dadurch gekennzeichnet, dass die Hohlräume (41) auf dem zylindrischen Teil (46) der Innenwand (46) des Mantels in der Nähe seines zweiten Endes (43) ausgebildet sind.

4. Verfahren zur Herstellung eines Kopfes (1) mit mindestens einem Mantel (40 ; 240) nach einem der Ansprüche 1 bis 3, dadurch gekennzeichnet, dass der Deckel (20 ; 220) einen Übergangsabschnitt in Form eines Kranzes (21) oder eines Zapfens (221) aufweist, der an den abreißbaren Ringabschnitt (10 ; 210) angrenzt und nach Abreißen des Ringabschnitts als Abdichtungsmittel dient.

5. Verfahren zur Herstellung eines Kopfes (1) mit mindestens einem Mantel (40 ; 240) nach Anspruch 4, dadurch gekennzeichnet, dass der Übergangsabschnitt in Form eines Kranzes (21) oder eines Zapfens (221) außerdem als Mittel zum Verschließen der Öffnung durch Verriegelung nach beendetem Absenken dient.

6. Verfahren zur Herstellung eines Kopfes (1) mit mindestens einem Mantel (40) nach Anspruch 5, dadurch gekennzeichnet, dass der Ansatz (3) einen Vorsprung (8) aufweist, der durch einfache Beobachtung seines Abstands am ersten Ende (44) des Mantels (40) als Unverletzlichkeitsbeweis dient.

7. Verfahren zur Herstellung eines Kopfes (1) mit mindestens einem Mantel (140) nach einem der Ansprüche 1 bis 6, dadurch gekennzeichnet, dass :
a) der Mantel (140) gleichzeitig mit dem Kopf (1) formgepresst wird, und zwar in einer vorläufigen Position, durch die er mit dem Deckel (20) und der Platte (30) die Form einer umgekehrten Kappe bekommt, wobei zum Zeitpunkt des Formpressens das erste Ende (44) des Mantels über eine Reihe von Materialzuführungsstegen (135) mit der Platte (30) verbunden wird.
b) das Ganze aus der Form herausgenommen, bis auf Raumtemperatur abgekühlt und dann um einen Formkern herum gelegt wird, der sich eng an die mittig angeordnete untere Form anschmiegt.
c) danach eine Platte auf das zweite Ende (43) des Mantels (140) drückt und dabei eine Axialbewegung in Richtung Tube ausführt, wodurch der Bruch der Stege (135), die den Mantel mit der Platte (30) verbanden, und dann das Absinken des Mantels um die Platte herum bewirkt wird, bis sich die Stifte (32) in den Hohlräumen (141) verriegeln.

8. Verfahren zur Herstellung eines Kopfes (1) mit mindestens einem Mantel (40) nach einem der Ansprüche 1 bis 6, dadurch gekennzeichnet, dass der Mantel (40) auf seiner Innenwand (46) zwischen seinem ersten Ende (44) und den Hohlräumen (41) mit Längsnuten (42) versehen ist, deren Tiefe geringer ist als die Tiefe der Hohlräume und deren Breite mindestens der Breite der Stifte (32) der Platte (30) entspricht.

9. Verfahren zur Herstellung eines Kopfes (1) mit mindestens einem Mantel (40) aus Kunststoff mit einem offenen Ende (60) zur anschließenden Befestigung auf dem offenen Ende eines Behälters oder einer weichelastischen Tube (500) und mit einem Ansatz (3), dessen Austrittsöffnung (7) über einen abreißbaren Ringabschnitt (10) mit einem Deckel (20) verbunden ist, der vor Abbrechen des Ringabschnitts als Dichtverschluss fungiert und danach als Abdeckung der Öffnung dienen kann, Verfahren bestehend aus einem Pressschritt für den Kopf (1) aus Kunststoff und einem Formschritt für den Mantel (40) aus Kunststoff, wobei der Mantel separat ausgebildet oder mit dem Körper einer kompletten Kapsel fest verbunden sein kann, dadurch gekennzeichnet, dass :
a) der Deckel (20) bis über die Außenwand des Ansatzes hinaus durch eine Platte (30) verlängert ist, deren Umfang (31) durch eine Außenlinie begrenzt ist, die mit dem abreißbaren Ringabschnitt (10) eine gemeinsame Symmetrieachse hat, und mit Mitteln (32) zur festen Verbindung mit dem Mantel versehen ist;
b) der Mantel (40) an einem Ende (44) offen ist und seine Innenwand (46) zumindest teilweise zylindrisch ist, wobei sich deren Teilabschnitt eng an den Umfang (31), außerhalb der Stifte, der Platte (30) in Verlängerung des Deckels (20) anschmiegt, wobei der zylindrische Teil der Innenwand (46) mit mindestens drei Hohlräumen (41) zur Aufnahme der Stifte versehen ist;
c) nach dem Formpressen des Kopfes (1) und des Mantels (40) der Mantel vor die Platte (30) geführt und dann mit seinem ersten Ende (44) bis zur Verriegelung um diese herum gelegt wird, wobei die Verriegelung durch das Zusammenwirken der sich ergänzenden Mittel (32 und 41) zur festen Verbindung des Mantels (40) und der Platte (30) bewirkt wird.

10. Weichelastische Tube mit einem Kopf (1) aus Kunststoff, welcher einen Ansatz (3) aufweist, dessen Austrittsöffnung (7) über einen abreißbaren Ringabschnitt (10) mit einem Deckel (20) verbunden ist, der vor Abbrechen des Ringabschnitts als Dichtverschluss fungiert und danach als Abdeckung der Öffnung dienen kann, dadurch gekennzeichnet, dass der Kopf mit einem Mantel (40) versehen ist, wobei der den Ansatz (3) umgebende Mantel Mittel (41) aufweist zur festen Verbindung mit dem Deckel (20) über eine Platte (30), die in Verlängerung des Deckels ausgebildet und mit Mitteln (32) versehen ist, die die des Mantels ergänzen, wobei der Gesamtkomplex Mantel (40), Deckel (20) und Platte (30) nach Abreißen des Ringabschnitts einen Verschlussstopfen bildet.

11. Behälter mit einem Ende, auf dem ein Kopf (1) aus Kunststoff befestigt ist mit einem Ansatz (3), dessen Austrittsöffnung (7) über einen abreißbaren Ringabschnitt (10) mit einem Deckel (20) verbunden ist, der vor Abbrechen des Ringabschnitts als Dichtverschluss fungiert und danach als Abdeckung der Öffnung dienen kann, dadurch gekennzeichnet, dass der Kopf mit einem Mantel (40) versehen ist, wobei der den Ansatz (3) umgebende Mantel Mittel (41) aufweist zur festen Verbindung mit dem Deckel (20) über eine Platte (30), die in Verlängerung des Deckels ausgebildet und mit Mitteln (32) versehen ist, die die des Mantels ergänzen, wobei der Gesamtkomplex Mantel (40), Deckel (20) und Platte (30) nach Abreißen des Ringabschnitts einen Verschlussstopfen bildet.

## Claims

1. Process for manufacturing a head (1) provided with at least one skirt (40) in plastic material comprising an open end (60) intended to be fixed later onto the open end of a receptacle or a flexible tube (500) and comprising a neck (3) whose outlet orifice (7) is linked by a tearable annular portion (10) to a cap (20) playing the role of a sealed obturator before rupture of said annular portion and afterwards being able to serve to re-close said orifice, said cap (20) being prolonged beyond the external wall of the neck by a plate (30), said process comprising a stage of moulding the head (1) in plastic material, a stage of shaping the skirt (40) in plastic material, said skirt being open at a first extremity (44), characterised in that:
a) the periphery (31) of the plate (30) is defined by a contour which has a common symmetrical axis with the tearable annular portion (10) and is provided with means (32) for integralisation with said skirt;
b) the skirt (40) is set in a temporary position relative to said plate (30);
c) the internal wall (46) of the skirt (40) is, at least partially, cylindrical, its cross-section following the shape of the periphery (31) of the plate (30), the cylindrical part of the internal wall (46) being provided with integralisation means supplementary to those of said plate (30);
d) after moulding of the head (1) and shaping of the skirt (40), said skirt is brought to face the plate (30) and then slipped by its first extremity (44) around the latter until it is immobilised, this being caused by the co-operation of means (32 and 41) of supplementary integralisation of the skirt (40) and the plate (30) leading to blocking in rotational and axial translation.

2. Process for manufacturing a head (1) according to Claim 1, characterised in that said supplementary integralisation means (32 and 41) have at least three lugs (32) on the periphery (31) of the plate (30) in prolongation of the cap (20) and at least three cavities (41) on the cylindrical part of the internal wall (46) of the skirt (40).

3. Process for manufacturing a head (1) according to Claim 2, characterised in that the cavities (41) are made on the cylindrical part of said internal wall (46) of said skirt (40), close to its second extremity (43).

4. Process for manufacturing a head (1) provided with at least one skirt (40;240) according to any one of Claims 1 to 3, characterised in that the cap (20;220) comprises a transition portion, in the form of a crown (21) or a locking stud (221), adjacent to the tearable annular portion (10;210) and which serves, after tearing off said annular portion, as a means of sealing.

5. Process for manufacturing a head (1) provided with at least one skirt (40;240) according to Claim 4 characterised in that the transition portion, in the shape of a crown (21) or a locking stud (221) also serves as a means for closing the outlet by screwing after pushing in.

6. Process for manufacturing a head (1) provided with at least one skirt (40) according to Claim 5, characterised in that the neck (3) comprises a shoulder (8) serving by simple observation of its distance from the first extremity (44) of the skirt (40) as a tamperproof indicator.

7. Process for manufacturing a head (1) provided with at least one skirt (140) according to any one of Claims 1 to 6, characterised in that
a) the skirt (140) is moulded simultaneously with the head (1), in a temporary position which makes it, with the cap (20) and the plate (30), take the shape of an upside-down hat, the first extremity (44) of the skirt being linked to the plate (30) by several bridges (135) made by bringing in material at the moment of moulding;
b) the ensemble is de-moulded, cooled down to ambient temperature and then slipped over a core having the shape of the central lower mould;
(c) a plaque is then made to press on the second extremity (43) of the skirt (140) and carries out an axial movement in the direction of the tube, causing rupture of the bridges (135) which linked said skirt to the plate (30) and then pushing down said skirt around said plate until the lugs (32) are immobilised in the cavities (141).

8. Process for manufacturing a head (1) provided with at least one skirt (40) according to any one of Claims 1 to 6, characterised in that the skirt (40) is provided, on its internal wall (46), between its first extremity (44) and said cavities (41), with longitudinal grooves (42), of a depth less than that of said cavities, and width at least equal to that of the lugs (32) of the plate (30).

9. Process for manufacturing a head (1) provided with at least one skirt (40) in plastic material comprising an open extremity (60) intended to be fixed later onto the open extremity of a receptacle or flexible tube (500) and comprising a neck (3) whose outlet orifice (7) is linked by a tearable annular portion (10) to a cap (20) playing the role of a sealed obturator before rupture of said annular portion and afterwards being able to be used to re-close said orifice, comprising a stage for moulding the head (1) in plastic material and a stage for shaping the skirt (40) in plastic material, said skirt being able to be alone or integral with the body of a complete capsule, characterised in that:
a) the cap (20) is prolonged beyond the external wall of the neck by a plate (30) whose periphery (31) is defined by a contour which has a common axis of symmetry with the tearable annular portion (10) and is provided with integralisation means (32) with said skirt;
b) the skirt (40) is open at one extremity (44) and its internal wall (46) is, at least partially, cylindrical, its cross-section taking the shape of the periphery (31), excluding lugs, of the plate (30) in prolongation of the cap (20), the cylindrical part of the internal wall (46) being provided with at least three cavities (41) intended to lodge said lugs;
c) after moulding the head (1) and the skirt (40), said skirt is brought to face the plate (30) and then, by its first extremity (44), slipped over this as far as immobilisation, the latter being caused by the co-operation of means (32 and 41) of supplementary integralisation between the skirt (40) and the plate (30).

10. A flexible tube with a head (1) in plastic material comprising a neck (3) whose oulet orifice (7) is linked by a tearable annular portion (10) to a cap (20) playing the role of sealed obturator before rupture of said annular portion and afterwards being able to be used to re-close said orifice, characterised in that said head is provided with a skirt (40), said skirt surrounding said neck (3), being provided with means of integralisation (41) with the cap (20) through the intermediary of a plate (30) which prolongs said cap and which is provided with means of integralisation (32) supplementary to those of the skirt, the ensemble skirt (40), cap (20) and plate (30) constituting a reclosure stopper after tearing off said annular portion.

11. Recipient having an extremity on which is fixed a head (1) in plastic material comprising a neck (3) whose outlet orifice (7) is linked by a tearable annular portion (10) to a cap (20) playing the role of sealed obturator before rupture of said annular portion and afterwards being able to be used to re-close said orifice, characterised in that said head is provided with a skirt (40), said skirt surrounding said neck (3) being provided with means of integralisation (41) with the cap (20) through the intermediary of a plate (30) which prolongs said cap and which is provided with integralisation means (32) supplementary to those of the skirt, the ensemble skirt (40), cap (20) and plate (30) constituting a reclosure stopper after tearing off said annular portion.
